# EUROPÄISCHE PATENTANMELDUNG

(11) **EP 0 576 999 A1**
(43) Veröffentlichungstag der Anmeldung: **05.01.1994**
(21) Anmeldenummer: 93110066.3
(22) Anmeldetag: 24.06.1993
(51) Int. Cl.: G02B 6/28, B29D 11/00

(54) **Verfahren und Vorrichtung zur Herstellung optischer Elemente**

(30) Priorität: 01.07.1992 DE 4221180
(71) Anmelder: Stribel GmbH, D-72636 Frickenhausen (DE)
(72) Erfinder: Drissler, Fritz, Dr., D-7906 Blaustein-Dietingen (DE)
(74) Vertreter: Hoeger, Stellrecht & Partner

(57) **Zusammenfassung**

Um ein Verfahren und eine Vorrichtung zur Herstellung von an Lichtleiter anschließbaren optischen Elementen zur Verfügung zu stellen, bei welcher derartige optische Elemente auf einfache Weise, insbesondere in kleinen bis mittleren Stückzahlen möglichst vorteilhaft, präzise und mit reproduzierbaren Eigenschaften herstellbar sind, wird vorgeschlagen, daß das optische Element aus einem plattenförmigen Ausgangsmaterial durch eine relativ zu diesem längs einer definiert vorgebbaren Kontur verfahrbare Schneideinrichtung ausgeschnitten wird.

## Beschreibung

Die Erfindung betrifft ein Verfahren und eine Vorrichtung zur Herstellung von an Lichtleiter anschließbaren insbesondere planaren optischen Elementen, insbesondere zur Herstellung von sogenannten passiven optischen Kopplern oder Sensoren.

Derartige optische Koppler dienen dazu, in einem Lichtwellenleiter ankommende optische Signale in einen oder mehrere andere Lichtwellenleiter einzukoppeln oder in mehreren Lichtleitern ankommende Signale in einen oder ebenfalls mehrere Lichtleiter überzukoppeln.

Derartige optische Koppler wurden bislang durch Zusammenkleben oder Zusammenschmelzen oder Zusammendrücken von Lichtwellenleitern hergestellt.

Der Nachteil dieser bislang bekannten Verfahren und der hierzu bestehenden Vorrichtungen ist darin zu sehen, daß das Herstellungsverfahren aufwendig ist und zum Teil schlecht reproduzierbare Ergebnisse, insbesondere hinsichtlich der optischen Dämpfungen, liefert.

Der Erfindung liegt daher die Aufgabe zugrunde, ein Verfahren und eine Vorrichtung zur Verfügung zu stellen, bei welcher derartige optische Elemente auf einfache Weise, insbesondere in kleinen bis mittleren Stückzahlen möglichst vorteilhaft, präzise und mit reproduzierbaren Eigenschaften herstellbar sind.

Diese Aufgabe wird bei einem Verfahren der eingangs beschriebenen Art erfindungsgemäß dadurch gelöst, daß das optische Element aus einem plattenförmigen Ausgangsmaterial durch eine relativ zu diesem längs einer definiert vorgebbaren Kontur auf dem plattenförmigen Ausgangsmaterial verfahrbare Schneideinrichtung ausgeschnitten wird.

Der Vorteil dieses Verfahrens ist darin zu sehen, daß dadurch die Möglichkeit geschaffen ist, planare optische Elemente mit beliebigen Konturen herzustellen, wobei durch das plattenförmig vorliegende Ausgangsmaterial in beliebiger Weise Verzweigungen oder andere optische Konturen in beliebig einfacher Weise und mit reproduzierbaren Ergebnissen herstellbar sind.

Insbesondere ausgehend von einem homogenen plattenförmigen Ausgangsmaterial sind reproduzierbare Ergebnisse dadurch einfach erreichbar, daß stets dieselben Konturen aus diesem Ausgangsmaterial ausgeschnitten werden.

Das Schneiden der Konturen zur Herstellung der optischen Elemente kann als bloßes Schneiden erfolgen, wobei in diesem Fall lediglich eine Schnittkante herstellbar ist, welche der Ausrichtung eines Schneidelements relativ zum plattenförmigen Ausgangsmaterial entspricht. Um jedoch eine definiert geformte, vorzugsweise abgerundete Schnittkante zu erhalten, ist es besonders vorteilhaft, wenn zusätzlich zum Ausschneiden der Kontur noch eine Kantenformung des optischen Elements erfolgt.

Besonders vorteilhaft ist es dabei, wenn die Kantenverformung durch ein Formelement erfolgt, welches auf die geschnittene Schnittkante einwirkt.

Das erfindungsgemäße Verfahren läßt sich besonders effektiv dann durchführen, wenn das Formelement am Schneidelement angeordnet ist, beispielsweise in Form einer an das Schneidelement anschließenden Formfläche.

Das Formen der Schnittkanten ist im einfachsten Fall durch Druck möglich, besonders vorteilhaft für eine reproduzierbare und formtreue Verformung der Schnittkanten ist es jedoch, wenn das Formelement beheizt wird.

Vorzugsweise kommt als plattenförmiges Ausgangsmaterial eine polymere Folie zum Einsatz. In diesem Fall erfolgt eine Beheizung des Formelements auf eine Temperatur, welche über einer Verformungstemperatur, vorzugsweise im Bereich einer Glasübergangstemperatur, der polymeren Folie liegt.

Das erfindungsgemäße Verfahren arbeitet dann besonders effektiv, wenn mit der Schneideinrichtung ein Schneiden von gegenüberliegenden Seitenkanten des optischen Elements gleichzeitig erfolgt, da somit zur Herstellung gegenüberliegender Seitenkanten des optischen Elements ein Verarbeitungsschritt erforderlich ist und darüber hinaus dadurch die Genauigkeit der Konturen durch den Abstand der beiden Schneideinrichtungen relativ zueinander festgelegt ist und damit eine exakte Führung der Folie relativ zur Schneideinrichtung im Bereich des Schnittes nicht notwendig ist, was aufgrund der in der Regel erforderlichen dünnen Folien mit Dicken von 0,25 bis 1,5 mm problematisch ist.

Insbesondere zur Herstellung von optischen Elementen, welche einen Kern und eine Ummantelung aufweisen ist es besonders vorteilhaft, wenn als plattenförmiges Ausgangsmaterial eine dreischichtige Folie mit einer unteren und oberen Schicht sowie einer mittleren Schicht zum Einsatz kommt, wobei die mittlere Schicht das Kernmaterial ist und die obere und untere Schicht die Ummantelung bilden.

Vorzugsweise ist dabei vorgesehen, daß durch die Formung der Schnittkanten ein Umlegen einer Oberflächenschicht des Ausgangsmaterials als Ummantelung um diese erfolgt. Vorzugsweise wird die Ummantelung durch die Formung der Schnittkanten aufeinanderzu bewegt und besonders vorteilhaft ist es, wenn die Ummantelung durch die Formung der Schnittkanten im Bereich derselben durch Zusammenführen der oberen und unteren Oberflächenschicht im wesentlichen geschlossen wird.

Besonders vorteilhaft ist es, wenn bei dem erfindungsgemäßen Verfahren die Schnittkanten eine ungefähr halbkreisförmige Form erhalten.

Ferner ist es besonders zweckmäßig, wenn das optische Element durch Formung der Schnittkanten mit Anschlüssen für die Lichtleiter mit im wesentlichen kreisrundem Querschnitt versehen wird.

Die erfindungsgemäße Aufgabe wird darüber hinaus durch eine Vorrichtung zur Herstellung von an Lichtleiter anschließbaren optischen Elementen, insbesondere zur Durchführung des vorstehend beschriebenen Verfahrens, erfindungsgemäß dadurch gelöst, daß die Vorrichtung eine Schneideinrichtung zum Ausschneiden einer Kontur des optischen Elements aus einem plattenförmigen Ausgangsmaterial aufweist und daß die Schneideinrichtung entlang der vorgebbaren Kontur relativ zu dem plattenförmigen Ausgangsmaterial bewegbar ist.

Der Vorteil der erfindungsgemäßen Vorrichtung ist darin zu sehen, daß durch das Ausschneiden des optischen Elements aus einem plattenförmigen Ausgangsmaterial in einfacher Weise die Eigenschaften desselben reproduzierbar sind, da das Ausschneiden der Kontur mit der erforderlichen Genauigkeit möglich ist und, ausgehend von einem homogenen Ausgangsmaterial, somit die Eigenschaften des optischen Elements durch die Kontur und das Ausgangsmaterial eindeutig definierbar sind.

Besonders vorteilhaft ist bei der erfindungsgemäßen Vorrichtung das Vorsehen einer Schneideinrichtung, welche entlang der vorgebbaren Kontur relativ zum Ausgangsmaterial bewegbar ist, vorzugsweise mittels einer Steuerung, so daß damit insbesondere Kleinserien von optischen Elementen einerseits reproduzierbar andererseits einfach und effizient herstellbar sind.

Die Schneideinrichtung kann prinzipiell in unterschiedlichster Art und Weise ausgebildet sein. Besonders vorteilhaft ist es, wenn die Schneideinrichtung ein Schneidelement und ein Gegenlager für dieses Schneidelement aufweist.

Das Schneidelement ist vorzugsweise in einer Schneidrichtung und einer Querrichtung zu dieser in einer zur Ebene des plattenförmigen Ausgangsmaterials parallelen Ebene relativ zu diesem bewegbar.

Das Schneidelement kann in unterschiedlichster Art und Weise ausgebildet sein. Beispielsweise wäre es denkbar, als Schneidelement ein Schneidmesser vorzusehen, welches beispielsweise stehend oder oszillierend angeordnet sein kann. Besonders vorteilhaft ist es jedoch, wenn das Schneidelement ein Schneidrad ist, da dieses, insbesondere bei dünnen plattenförmigen Ausgangsmaterialien, wie Folien, gute Schneidergebnisse liefert.

Das Gegenlager des Schneidrades kann im einfachsten Fall als stationäre Gegenschneidklinge ausgebildet sein. Noch vorteilhafter ist es jedoch, wenn das Gegenlager ein Gegenschneidrad ist.

Da dünne plattenförmige Ausgangsmaterialien sehr empfindlich sind ist es, um ein gutes Schneidergebnis zu erreichen, vorteilhaft, wenn das Schneidrad auf einer angetriebenen Welle sitzt.

Das Gegenschneidrad braucht nicht zwangsläufig angetrieben sein. Noch vorteilhafter ist es jedoch, wenn auch das Gegenschneidrad auf einer angetriebenen Welle sitzt.

Insbesondere ist es vorteilhaft, wenn das Schneidrad und das Gegenschneidrad synchron zueinander angetrieben sind.

Vorzugsweise ist dem Schneidrad hierzu ein Schneidradantrieb zugeordnet und dem Gegenschneidrad ein Gegenschneidradantrieb, welche miteinander synchronisiert sind.

Um beliebige Konturen aus dem plattenförmigen Ausgangsmaterial ausschneiden zu können, ist vorteilhafterweise vorgesehen, daß das Schneidrad und das Gegenschneidrad nicht nur in der zum plattenförmigen Ausgangsmaterial parallelen Ebene bewegbar, sondern auch um eine senkrecht auf dieser Ebene stehende Achse drehbar sind, so daß das Schneidrad und das Gegenschneidrad stets in tangentialer Ausrichtung zur Kontur schneiden.

Dies läßt sich insbesondere dann einfach erreichen, wenn das Schneidrad und das Gegenschneidrad mit einem Querverschiebeantrieb quer zu einer Schneidrichtung bewegbar und zusätzlich noch um eine senkrecht auf diesen Richtungen stehende Achse drehbar sind.

Die erfindungsgemäßen optischen Elemente lassen sich besonders vorteilhaft dann herstellen, wenn die Vorrichtung Kantenformelemente aufweist, mit welchen den Schnittkanten eine definierte Kantenform gegeben werden kann.

Ein besonders vorteilhaftes Ausführungsbeispiel der erfindungsgemäßen Vorrichtung sieht dabei vor, daß die Formelemente durch Räder mit Formflächen gebildet sind.

Vorzugsweise sind die Formflächen konkave Flächen, so daß dadurch gerundete Schnittkanten formbar sind.

Prinzipiell wäre eine Verformung der Schnittkanten durch Druck möglich. Besonders gute und reproduzierbare Verformungen der Schnittkanten lassen sich jedoch dann erreichen, wenn die Formflächen temperierbar sind.

Bei dem plattenförmigen Ausgangsmaterial zur Herstellung der erfindungsgemäßen optischen Elemente handelt es sich vorzugsweise um Polymermaterial. Besonders vorteilhaft ist es daher, wenn die Formflächen auf eine Temperatur oberhalb der Verformungstemperatur des Ausgangsmaterials temperierbar sind. Vorzugsweise sind die Formflächen auf eine Temperatur bringbar, welche über einer Schmelzverformungstemperatur liegt. Insbesondere ist dies die Glasübergangstemperatur des Ausgangsmaterials.

Ein besonders vorteilhaftes Ausführungsbeispiel der erfindungsgemäßen Lösung sieht vor, daß jedes Schneidelement mit einem Formelement versehen und als Schneidformelement ausgebildet ist, so daß zusätzlich zum Schneidvorgang dasselbe Element auch gleichzeitig die Formung der Schnittkante bewirkt. Im Falle von Schneidrädern sind diese somit mit sich an Schneidkanten derselben anschließenden Formflächen versehen.

Insbesondere ist bei dem Gegenlager zum jeweiligen Schneidelement eine sich an die Schneidkante desselben anschließende Formfläche vorgesehen, so daß ein Formen der Schnittkante von beiden Oberflächen des plattenförmigen Ausgangsmaterials her erfolgt.

Besonders präzise lassen sich die optischen Elemente dann herstellen, wenn die Vorrichtung einander paarweise zugeordnete Schneideinrichtungen aufweist. Vorzugsweise sind dies beispielsweise Schneideinrichtungen, mit welchen das optische Element auf gegenüberliegenden Seiten ausgeschnitten wird, so daß jeweils ein Schneiden von einander gegenüberliegenden Konturen gleichzeitig erfolgt. Dies hat den großen Vorteil, daß dadurch die Genauigkeit gesteigert wird, da die Form des optischen Elements durch den Relativabstand der beiden Schneideinrichtungen definierbar ist.

In dem Fall, in welchem nur Außenkanten zu schneiden sind, ist es ausreichend, wenn ein Paar von Schneideinrichtungen zum Schneiden von Außenkanten vorgesehen ist.

Sollten auch gleichzeitig Innenkanten geschnitten werden, so ist es noch vorteilhafter, wenn zusätzlich zu diesem Paar von Schneideinrichtungen eine Paar von Schneideinrichtungen für Innenkanten vorgesehen ist.

Diese Schneideinrichtungen für Innenkanten sind insbesondere so ausgebildet, daß sie mit dem plattenförmigen Ausgangsmaterial in Schneidkontakt bringbar oder außer Schneidkontakt bringbar, das heißt also senkrecht zur Ebene des plattenförmigen Ausgangsmaterials bewegbar sind.

Besonders vorteilhafte Formen der optischen Elemente lassen sich dann ausschneiden, wenn die Formflächen der Schneideinrichtungen für die Außenkanten so geformt sind, daß im Querschnitt halbkreisförmige Außenkanten schneidbar sind. Vorzugsweise sind dabei die Schneideinrichtungen soweit aufeinander zu bewegbar, daß im Querschnitt ungefähr kreisförmige Querschnitte des optischen Elements zum Anschluß an die Lichtleiter herstellbar sind. Dies gilt für das Zusammenwirken eines Paars von Schneideinrichtungen für die Außenkanten oder das Zusammenwirken einer Schneideinrichtung für eine Außenkante und einer Schneideinrichtung für eine Innenkante.

Besonders vorteilhafte Schneidergebnisse lassen sich dann erreichen, wenn die Schneidkanten des Schneidrades und des Gegenschneidrades geringfügig überlappend nebeneinander stehen, so daß dadurch ein vollständiges Durchschneiden des plattenförmigen Ausgangsmaterials gesichert ist.

Erfindungsgemäß findet als plattenförmiges Ausgangsmaterial vorzugsweise eine polymere Folie Verwendung, wobei die Dicken derartiger Folien zwischen ungefähr 0,2 und ungefähr 2 mm, vorzugsweise zwischen ungefähr 0,25 und ungefähr 1,5 mm liegen.

Besonders zweckmäßig ist, wenn als plattenförmiges Ausgangsmaterial eine Folie aus drei Schichten zum Einsatz kommt, wobei eine untere und eine obere Schicht eine Ummantelung bilden, während die mittlere Schicht das optische Kernmaterial darstellt. In diesem Fall ist der Brechungsindex der Ummantelung geringer als der des Kernmaterials. Darüber hinaus ist es, um insbesondere im Bereich der Schnittkanten die Ummantelung im wesentlichen aufeinanderzuführen oder noch besser schließen zu können, vorteilhaft, wenn die Verformungstemperatur der mittleren Schicht niedriger liegt als die der oberen und unteren Schicht, so daß primär eine Verformung der mittleren Schicht erfolgt und die obere und die untere Schicht erhalten bleiben und somit aufeinanderzu bewegbar und im wesentlichen aneinanderanfügbar sind.

Als Folienmaterial kommen vorzugsweise optisch transparente Kunststoffe, wie beispielsweise Polymethylmethacrylat, Polycarbonat oder Polyethylenterephtalat zum Einsatz. Vorzugsweise ist in diesem Fall die Formfläche auf eine Temperatur zwischen ungefähr 80 bis ungefähr 300°C, vorzugsweise auf eine Temperatur im Bereich von ungefähr 90 bis ungefähr 200°C aufzuheizen. Diese Werte ergeben sich dadurch, daß die Temperatur der Formflächen ungefähr 20° über der Glasübergangstemperatur des verwendeten polymeren Materials liegen sollte.

Insbesondere sind derartige optische Elemente zum Einsatz bei polymeren Lichtleitern geeignet, da die Polymerfolie hinsichtlich des Brechungsindexes optimal an diejenigen von polymeren Lichtleitern angepaßt ist. Es ist aber auch denkbar, derartige, aus polymerem Material hergestellte optische Elemente zur Verwendung bei Lichtleitern aus Glas vorzusehen.

Weitere Merkmale und Vorteile der Erfindung ergeben sich aus der nachfolgenden Beschreibung sowie der zeichnerischen Darstellung einiger Ausführungsbeispiele.

In der Zeichnung zeigen:
- Fig. 1: eine perspektivische Darstellung eines ersten Ausführungsbeispiels einer erfindungsgemäßen Vorrichtung;
- Fig. 2: eine vergrößerte perspektivische Darstellung des Schnitts;
- Fig. 3: eine vergrößerte perspektivische Darstellung des Schnitts bei einem zweiten Ausführungsbeispiel ähnlich Fig. 2;
- Fig. 4: eine vergrößerte Darstellung eines Schnitts von Schneideinrichtungen für Außenkanten bei einem dritten Ausführungsbeispiel;
- Fig. 5: eine Draufsicht auf einen optischen Koppler;
- Fig. 6: eine Darstellung des Schnitts von Schneideinrichtungen für Innenkanten ähnlich Fig. 4;
- Fig. 7: einen Schnitt längs Linie 7-7 in Fig. 5;
- Fig. 8: einen Schnitt längs Linie 8-8 in Fig. 5 und
- Fig. 9: einen Schnitt längs Linie 9-9 in Fig. 5.

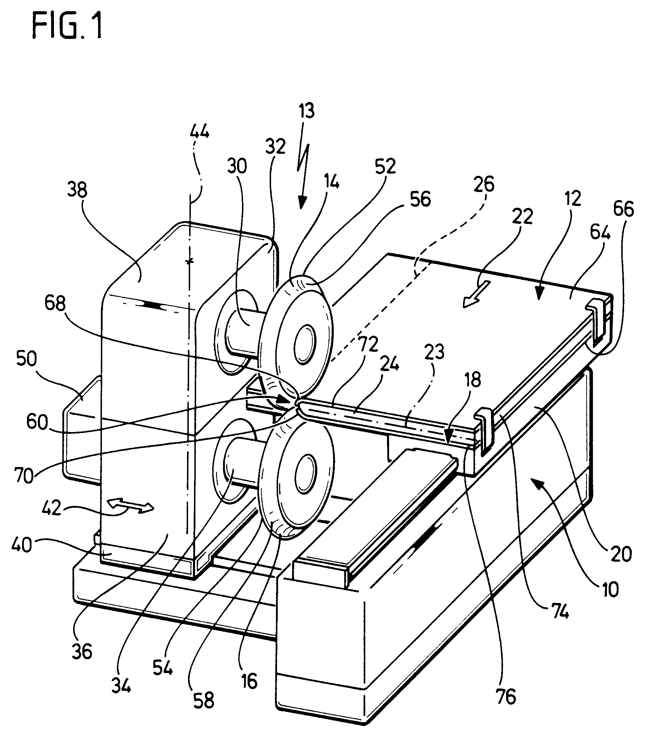

Ein in Fig. 1 dargestelltes erstes Ausführungsbeispiel einer erfindungsgemäßen Vorrichtung zur Herstellung von an Lichtleiter, insbesondere polymere Lichtleiter anschließbaren optischen Elementen, insbesondere optischen Kopplern, umfaßt eine Aufnahme 10 für ein plattenförmiges Ausgangsmaterial 12, aus welchem das herzustellende optische Element ausschneidbar ist. Hierzu ist die Vorrichtung mit einer Schneideinrichtung 13 umfassend ein Schneidrad 14 und ein diesem zugeordneten Gegenschneidrad 16 versehen, wobei letzteres als Gegenlager für das Schneidrad 14 dient. Das Schneidrad 14 und das Gegenschneidrad 16 sind nun so relativ zum plattenförmigen Ausgangsmaterial 12 bewegbar, daß aus diesem die Form des optischen Elements, das heißt insbesondere des Kopplers ausschneidbar ist.

Hierzu umfaßt die Aufnahme 10 eine Auflagefläche 18, auf welcher das Ausgangsmaterial 12 auflegbar und fixierbar ist. Die Auflagefläche 18 ist ihrerseits von einer Linearverschiebeeinheit 20 getragen, durch welche das Ausgangsmaterial 12 in einer zu der vom Ausgangsmaterial 12 aufgespannten Fläche 23 parallelen Schneidrichtung 22 bewegbar ist.

Das Ausgangsmaterial 12 steht seitlich über die Auflagefläche 18 über und läuft mit diesem überstehenden Abschnitt 24 zwischen das Schneidrad 14 und das Gegenschneidrad 16 hinein, so daß von diesen ein Schnitt längs einer Schnittlinie 26 zum Ausschneiden einer gewünschten Kontur durchführbar ist.

Hierzu umfaßt die Schneideinrichtung 13 eine das Schneidrad 14 tragende Antriebswelle 30, die ihrerseits von einem Schneidradantrieb 32 antreibbar ist.

In gleicher Weise sitzt das Gegenschneidrad 16 auf einer Antriebswelle 34, die ihrerseits von einem Gegenschneidradantrieb 36 antreibbar ist.

Sowohl der Schneidradantrieb 32 als auch der Gegenschneidradantrieb 36 sind in einer Antriebssäule 38 der Schneideinrichtung 13 angeordnet, die ihrerseits auf einer Schneidradausrichteinheit 40 sitzt, mit welcher eine Querverschiebung in einer senkrecht zur Schneidrichtung 22 und parallel zur Fläche 23 verlaufenden Querrichtung 42 und eine Drehung um eine senkrecht auf der Fläche 23 stehende Drehachse 44 der Antriebssäule 38 durchführbar ist, so daß mit dem Schneidrad 14 und dem Gegenschneidrad 16 beliebige Schnittlinien 26 in dem überstehenden Abschnitt 24 des Ausgangsmaterials 12 realisierbar sind.

Zur Steuerung des Vorschubs des Ausgangsmaterials 12 in Schneidrichtung 22 sowie des Schneidrades 14 und des Gegenschneidrades 16 durch Drehung um die Drehachse 44 und Verschiebung in der Querrichtung 42 ist eine als Ganzes mit 50 bezeichnete Steuereinrichtung vorgesehen, welche die Möglichkeit schafft, sowohl die Schneidradausrichteinheit 40 als auch die Linearverschiebeeinheit 20 entsprechend der zu realisierenden Schnittlinie 26 anzusteuern.

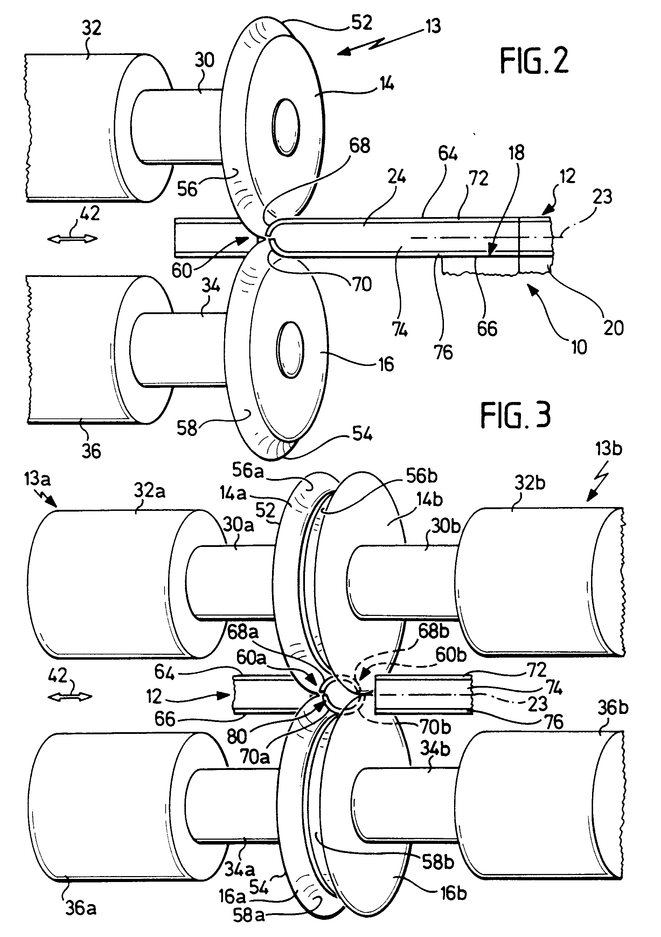

Wie in Fig. 2 dargestellt, sind das Schneidrad 14 und das Gegenschneidrad 16 vorzugsweise so ausgebildet, daß sie eine Schneidkante 52 bzw. 54 aufweisen, dabei gleichzeitig aber auch als Formräder ausgebildet sind und daher an die Schneidkanten 52 bzw. 54 sich anschließende Formflächen 56 bzw. 58 aufweisen. Beide Formflächen 56 bzw. 58 sind konkav gewölbt und auf derselben Seite der Schneidkante 52 bzw. 54 angeordnet.

Vorzugsweise sind die Formflächen 56 bzw. 58 so gewölbt, daß sie im Querschnitt jeweils die Form eines Viertelkreisbogens aufweisen.

Durch eine derartige Ausbildung des Schneidmessers 14 und des Gegenschneidmessers 16 wird die Möglichkeit eröffnet, eine Schnittkante 60 des Ausgangsmaterials nicht so auszuführen, daß diese über ihre gesamte Höhe senkrecht zu der Ebene 23 verläuft, in welcher sich das Ausgangsmaterial 12 erstreckt, sondern im Bereich eines Übergangs zu einer Oberseite 64 und einer Unterseite 66 des Ausgangsmaterials jeweils eine Rundung 68 bzw. 70 aufweist, welche vorzugsweise eine im Querschnitt halbkreisähnliche Rundung der Schnittkante 60 ergibt.

Insbesondere bei Verwendung eines Ausgangsmaterials 12, welches, wie in Fig. 2 dargestellt, aus drei Schichten 72, 74 und 76 aufgebaut ist, wobei die untere Schicht 72 und die obere Schicht 76 identisch und aus Material hergestellt sind, welches eine Umhüllung bildet und daher einen niedrigeren Brechungsindex als die mittlere Schicht 74 aufweist, wird durch diese Ausbildung des Schneidrads 14 und des Gegenschneidrads 16 mit Formflächen 56 und 58 die Möglichkeit geschaffen, jeweils die obere Schicht 72 und die untere Schicht 76 um die Rundungen 68 bzw. 70 herumzulegen und die beiden Schichten 72 und 76 im Bereich der Schnittkante 60, vorzugsweise mittig derselben, im wesentlichen zusammenzuführen, so daß auch zur Schnittkante 60 hin der Abschluß der mittleren Schicht 74 durch Schichten mit einem niedrigen Brechungsindex erfolgt.

Vorzugsweise sind hierzu die Formflächen 56 und 58 auf eine Temperatur erwärmbar, die über einer Verformungstemperatur für die mittlere Schicht 74 liegt, um die Abrundungen 68 und 70 dauerhaft formen zu können.

Mit dieser Ausbildung des Schneidrades 14 und des Gegenschneidrades 16 läßt sich somit ein optisches Element mit auch im Bereich der Schnittkante 60 ummanteltem Kern, in Form der mittleren Schicht 74, herstellen.

Vorzugsweise sind das Schneidmesser 14 und das Gegenschneidmesser 16 so angeordnet, daß deren Schneidkanten 52 und 54 einander im Berührungsbereich geringfügig übergreifend verlaufen, so daß die eine Schneidkante neben der anderen liegt. Damit wird sichergestellt, daß ein vollständiges Durchschneiden des Ausgangsmaterials 12 erfolgt.

Ein zweites Ausführungsbeispiel einer erfindungsgemäßen Schneidvorrichtung, dargestellt in Fig. 3 umfaßt nicht nur eine Schneideinrichtung 13 sondern zwei Schneideinrichtungen 13a und 13b mit zwei Schneidrädern 14a und 14b und ferner zwei Gegenschneidrädern 16a und 16b.

Jedes der Schneidräder sitzt auf einer Antriebswelle 30a bzw. 30b und ist durch einen Schneidradantrieb 32a und 32b antreibbar. Gleiches gilt für die Gegenschneidräder 16a und 16b. Von denen sitzt ebenfalls jedes auf einer Antriebswelle 34a und 34b und ist durch einen Gegenschneidradantrieb 36a und 36b antreibbar.

Die Schneidräder 14a und 14b und die Gegenschneidräder 16a und 16b sind soweit aufeinanderzu bewegbar, daß deren Formflächen 56a und 56b zusammen mit den Formflächen 58a und 58b der Gegenschneidräder 16a und 16b das Ausschneiden eines durch zwei Schnittkanten 60a und 60b begrenzten optischen Elements 80 erlauben, welches einen im wesentlichen kreisähnlichen Querschnitt, begrenzt durch die Rundungen 68a und 68b sowie 70a und 70b aufweist. Dabei sind sowohl die obere Schicht 72 als auch die untere Schicht 76 jeweils halbkreisförmig um die mittlere Schicht 74 gebogen und stoßen im Bereich der Schnittkanten 60a und 60b aneinander an. Jedes der Schneidräder 14a und 14b ist mit seinem entsprechenden Gegenschneidrad 16a und 16b aber auch in der Querrichtung 42 bewegbar, so daß das optische Element eine beliebige Erstreckung in der Querrichtung aufweisen kann, und dabei stets jeweils im Bereich einander gegenüberliegender Schnittkanten 60a und 60b die Rundungen 68a und 70a bzw. 68b und 70b aufweist.

Vorzugsweise sind die beiden Schneidräder 14a und 14b sowie die Gegenschneidräder 16a und 16b koaxial zueinander angeordnet, so daß ein gleichzeitiges Ausschneiden des optischen Elements 80 auf einander gegenüberliegenden Schnittkanten 60a und 60b erfolgt.

In gleicher Weise sind bei dem in Fig. 3 lediglich ausschnittsweise dargestellten zweiten Ausführungsbeispiel jeweils die Schneidradantriebe 32a und 32b sowie die Gegenschneidradantriebe 36a und 36b um die Drehachse 44 drehbar, so daß durch jedes Schneidrad 14 mit seinem entsprechenden Gegenschneidrad 16 in gleicher Weise wie beim ersten Ausführungsbeispiel beliebige Schnittlinien 26 ausschneidbar sind.

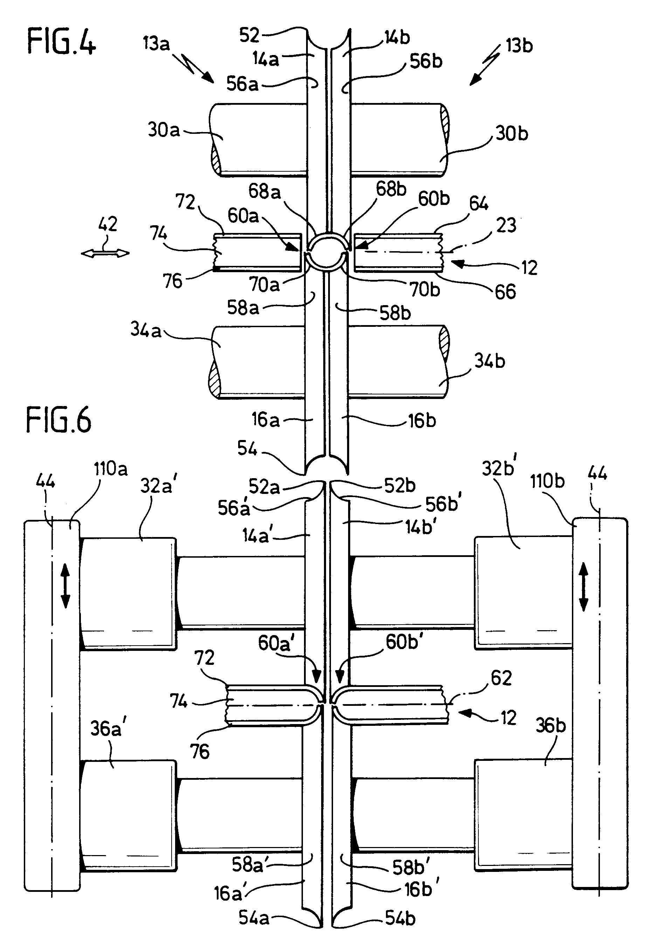

Bei einem dritten Ausführungsbeispiel der erfindungsgemäßen Vorrichtung, dargestellt in Fig. 4 sind einmal die Schneideinrichtungen 13a und 13b mit den Schneidrädern 14a und 14b sowie den Gegenschneidrädern 16a und 16b in gleicher Weise wie beim zweiten Ausführungsbeispiel mit Formflächen 56a und 56b sowie 58a und 58b vorgesehen, wie sie bereits im Zusammenhang mit dem zweiten Ausführungsbeispiel beschrieben wurden.

Diese Schneidräder 14 mit den Gegenschneidrädern 16 dienen dazu, Außenkonturen des auszuschneidenden optischen Elements 80 zu schneiden.

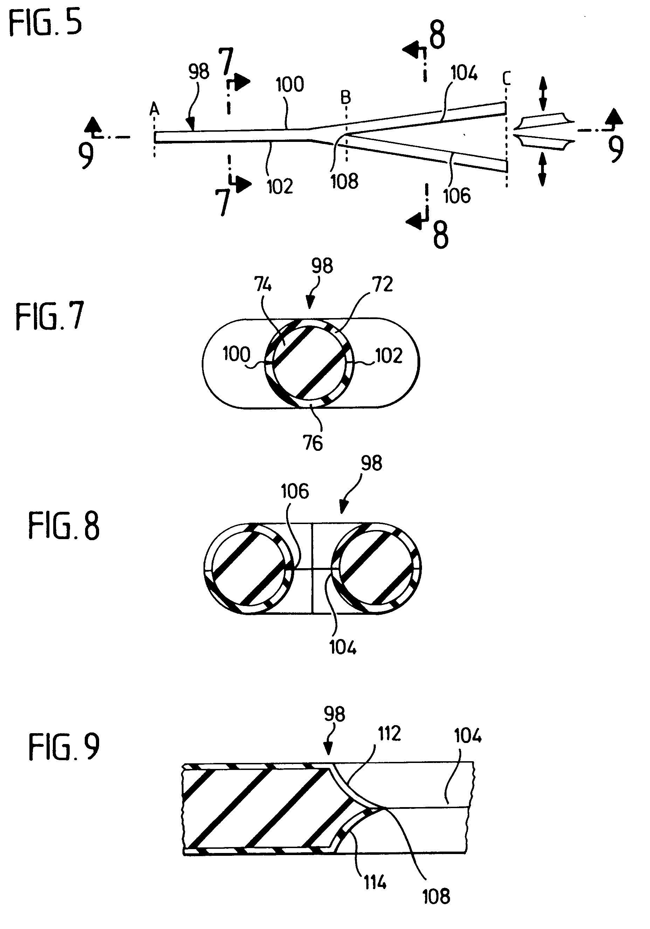

Zur Herstellung eines beispielsweise in Fig. 5 dargestellten Kopplers 98 ist das Schneiden von Außenkanten 100 und 102 erforderlich, welches mit den Schneidrädern 14 und 16 erfolgt. Zusätzlich ist aber auch noch das Schneiden von Innenkanten 104 und 106 erforderlich, wofür die in Fig. 6 dargestellten Schneideinrichtungen 13a' und 13b' mit den Schneidrädern 14a' und 14b' sowie den Gegenschneidrädern 16a' und 16b' vorgesehen sind, welche im Prinzip gleich aufgebaut sind, wie die Schneidräder 14 und 16, jedoch mit dem Unterschied, daß die konkaven Formflächen 56a' und 56b' auf den jeweils dem anderen Schneidrad abgewandten Seiten der Schneidkanten 52a und 52b angeordnet sind.

Gleiches gilt für die Formflächen 58a' und 58b' der Gegenschneidräder 16a' und 16b'. Mit diesen Schneidrädern 14a' und 14b' sowie den entsprechenden Gegenschneidrädern 16a' und 16b' erfolgt das Ausschneiden der Innenkanten 104 und 106 des optischen Kopplers 98, wobei hierzu ein Schneiden der Innenkanten 104 und 106 bis zu deren Vereinigungspunkt 108 erfolgt. Bei Erreichen des Vereinigungspunktes 108 erfolgt ein Verschieben der Schneidräder 14a' und 14b' und der Gegenschneidräder 16a' und 16b' in einer Richtung senkrecht zu der Ebene 23, so daß sie außer Schneideingriff mit dem Ausgangsmaterial 12 kommen. Hierzu sind die Schneidradantriebe 32a' und 32b' sowie die Gegenschneidradantriebe 36a' und 36b' in Richtung der Drehachse 44 jeweils an einer Zustelleinrichtung 110a und 110b angeordnet und mittels dieser Zustelleinrichtung symmetrisch zu der Ebene 62 bewegbar, das heißt auf diese zu so lange, bis die Schneidkanten 52 und 54 in Schneidstellung stehen oder voneinander weg so lange bis die Schneidkanten 52 und 54 mit Abstand von der Oberseite 64 und der Unterseite 66 des Ausgangsmaterials 12 stehen.

Zusätzlich sind die Schneidradantriebe 32a' und 32b' sowie die Gegenschneidradantriebe 36a' und 36b' noch in gleicher Weise wie beim zweiten und ersten Ausführungsbeispiel in der Querrichtung 42 verschiebbar und um die Drehachse 44 drehbar angeordnet, so daß beliebige Schnittlinien 26 zur Herstellung der Außenkanten 100 und 102 realisierbar sind.

Wie beim zweiten Ausführungsbeispiel erlauben die Schneidräder 14a', 14b' und die Gegenschneidräder 16a' und 16b' ebenfalls mittels ihrer Formflächen 56a' und 56b' sowie 58a' und 58b' die obere Schicht 72 und die untere Schicht 76 des optischen Kopplers 98 im Bereich der Innenkanten 104 und 106 aufeinander zu umzubiegen und die mittlere Schicht 74 zu deformieren und somit im Bereich der Schnittkanten 60a' und 60b' die mittlere Schicht 74 durch die obere Schicht 72 und die untere Schicht 76 zu umschließen.

Damit läßt sich der Koppler 98 so herstellen, daß er an seinem Ende A einen ungefähr kreisrunden Querschnitt zum Anschluß eines Lichtleiters aufweist, sich im Bereich B in zwei Äste unterteilt, die an ihren Enden C ebenfalls, wie in Fig. 8 dargestellt, einen ungefähr kreisrunden Querschnitt zum Anschluß jeweils eines Lichtleiters aufweisen, wobei jeweils ein von der mittleren Schicht 74 gebildeter Kern durch die zwei äußeren Schichten 72 und 76 ummantelt ist.

Darüber hinaus ergibt sich, wie in Fig. 9 dargestellt, im Bereich der Vereinigung 108 der beiden Innenkanten 104 und 106 ein spitz zulaufender Abschnitt mit zwei Rundungen 112 und 114, welche der Krümmung der Schneidkanten 52 und 54 entsprechen.

## Patentansprüche

1. Verfahren zur Herstellung von an Lichtleiter anschließbaren optischen Elementen,
**dadurch gekennzeichnet**,
daß das optische Element aus einem plattenförmigen Ausgangsmaterial durch eine relativ zu diesem längs einer definiert vorgebbaren Kontur verfahrbare Schneideinrichtung ausgeschnitten wird.

2. Verfahren nach Anspruch 1, dadurch gekennzeichnet, daß zusätzlich zum Ausschneiden der Kontur eine Kantenformung des optischen Elements durchgeführt wird.

3. Verfahren nach Anspruch 2, dadurch gekennzeichnet, daß die Kantenverformung mittels eines Formelements erfolgt, welches auf die geschnittene Kante einwirkt.

4. Verfahren nach Anspruch 3, dadurch gekennzeichnet, daß die Kantenformung gleichzeitig mit dem Schneiden durchgeführt wird.

5. Verfahren nach Anspruch 3 oder 4, dadurch gekennzeichnet, daß das Formelement beheizt wird.

6. Verfahren nach Anspruch 5, dadurch gekennzeichnet, daß das Formelement auf eine Temperatur aufgeheizt wird, welche über einer Verformungstemperatur des plattenförmigen Ausgangsmaterial liegt.

7. Verfahren nach einem der voranstehenden Ansprüche, dadurch gekennzeichnet, daß einander gegenüberliegende Seitenkanten des optischen Elements gleichzeitig ausgeschnitten werden.

8. Verfahren nach einem der Ansprüche 2 bis 7, dadurch gekennzeichnet, daß bei der Formung der Schnittkanten eine Oberflächenschicht des Ausgangsmaterial als Ummantelung um die geformten Bereiche gelegt wird.

9. Vorrichtung zur Herstellung von an Lichtleiter anschließbaren optischen Elementen, insbesondere zur Durchführung des Verfahrens nach einem der Ansprüche 1 bis 8, dadurch gekennzeichnet, daß die Vorrichtung eine Schneideinrichtung (13) zum Ausschneiden einer Kontur (26) des optischen Elements (80) aus einem plattenförmigen Ausgangsmaterial (12) aufweist und daß die Schneideinrichtung (13) entlang der vorgebbaren Kontur (26) relativ zu dem plattenförmigen Ausgangsmaterial (12) bewegbar ist.

10. Vorrichtung nach Anspruch 9, dadurch gekennzeichnet, daß die Schneideinrichtung (13) ein Schneidelement (14) und ein Gegenlager (16) für dieses aufweist.

11. Vorrichtung nach Anspruch 10, dadurch gekennzeichnet, daß das Schneidelement in einer zur Ebene (23) des plattenförmigen Ausgangsmaterial (12) parallelen Ebene relativ zu diesem bewegbar ist.

12. Vorrichtung nach Anspruch 10 oder 11, dadurch gekennzeichnet, daß das Schneidelement ein Schneidrad (14) ist.

13. Vorrichtung nach einem der Ansprüche 10 bis 12, dadurch gekennzeichnet, daß das Gegenlager ein Gegenschneidrad (16) ist.

14. Vorrichtung nach Anspruch 12 oder 13, dadurch gekennzeichnet, daß das Schneidrad (14) auf einer angetriebenen Welle (30) sitzt.

15. Vorrichtung nach Anspruch 13 oder 14, dadurch gekennzeichnet, daß das Gegenschneidrad (16) auf einer angetriebenen Welle (34) sitzt.

16. Vorrichtung nach Anspruch 14 oder 15, dadurch gekennzeichnet, daß das Schneidrad (14) und das Gegenschneidrad (16) synchron zueinander angetrieben ist.

17. Vorrichtung nach einem der Ansprüche 12 bis 16, dadurch gekennzeichnet, daß das Schneidrad (14) und das Gegenschneidrad (16) um eine senkrecht auf der Ebene (23) des plattenförmigen Ausgangsmaterials (12) stehende Achse (44) drehbar sind.

18. Vorrichtung nach einem der Ansprüche 9 bis 17, dadurch gekennzeichnet, daß die Vorrichtung Kantenformelemente (56, 58) aufweist, mit welchen den Schnittkanten (60) eine definierte Kantenform gebbar ist.

19. Vorrichtung nach Anspruch 18, dadurch gekennzeichnet, daß die Formelemente (56, 58) durch Räder mit Formflächen gebildet sind.

20. Vorrichtung nach Anspruch 18 oder 19, dadurch gekennzeichnet, daß die Formflächen (56, 58) konkave Flächen sind.

21. Vorrichtung nach einem der Ansprüche 19 bis 20, dadurch gekennzeichnet, daß die Formflächen temperierbar sind.

22. Vorrichtung nach einem der Ansprüche 18 bis 21, dadurch gekennzeichnet, daß jedes Schneidelement (14) mit einem Formelement (56) versehen und als Schneidformelement ausgebildet ist.

23. Vorrichtung nach Anspruch 22, dadurch gekennzeichnet, daß das Gegenlager zum jeweiligen Schneidelement mit einem Formelement versehen ist.

24. Vorrichtung nach einem der Ansprüche 9 bis 23, dadurch gekennzeichnet, daß die Vorrichtung einander paarweise zugeordnete Schneideinrichtungen (13) aufweist.

25. Vorrichtung nach Anspruch 24, dadurch gekennzeichnet, daß ein Paar von Schneideinrichtungen (13a, 13b) zum Schneiden von Außenkanten vorgesehen ist.

26. Vorrichtung nach Anspruch 24 oder 25, dadurch gekennzeichnet, daß ein Paar von Schneideinrichtungen (13a' und 13b') zum Schneiden von Innenkanten vorgesehen ist.

27. Vorrichtung nach Anspruch 26, dadurch gekennzeichnet, daß die Schneideinrichtungen für Innenkanten mit dem plattenförmigen Ausgangsmaterial (12) in Schneidkontakt bringbar und außer Schneidkontakt bringbar sind.
